# EUROPEAN PATENT APPLICATION

(11) **EP 4 661 195 A1**
(43) Date of publication of application: **10.12.2025**
(21) Application number: 24750068.9
(22) Date of filing: 24.01.2024
(51) Int. Cl.: H01M 50/533, H01M 10/04

(54) **POWER STORAGE DEVICE**

(30) Priority: 31.01.2023 JP 2023013413
(71) Applicant: Panasonic Intellectual Property Management Co., Ltd., Kadoma-shi, Osaka 571-0057 (JP)
(72) Inventor: KOZUKI, Kiyomi, Kadoma-shi, Osaka 571-0057 (JP); GESHI, Shinya, Kadoma-shi, Osaka 571-0057 (JP); SAKAMOTO, Shinichi, Kadoma-shi, Osaka 571-0057 (JP)
(74) Representative: Eisenführ Speiser
(86) International application number: PCT/JP2024/001961
(87) International publication number: WO 2024/162118

(57) **Abstract**

This power storage device (10) comprises: an electrode body (14) in which a positive electrode plate (11) and a negative electrode plate (12) are stacked with a separator (13) therebetween; and a negative electrode current collector plate (40) disposed on one end side in the axial direction P of the electrode body (14), wherein the negative electrode current collector plate (40) has a joining part (44) which extends in the stacking direction of the positive electrode plate (11) and the negative electrode plate (12) and is joined to the negative electrode plate (12) through welding, and a melting suppression part (51) is formed on a terminal end section in the welding direction of the joining part (44).

## Description

### TECHNICAL FIELD

The present disclosure relates to a current collector plate of a power storage device.

### BACKGROUND ART

A cylindrical battery that is one of power storage devices includes a wound electrode assembly where a positive electrode plate and a negative electrode plate are wound with a separator intervening therebetween. A large-diameter cylindrical battery has a structure where a negative electrode current collector plate is joined to a negative electrode core exposed portion protruding from the wound electrode assembly (hereinafter, an end surface current collection structure) in some cases (e.g., Patent Literature 1).

### CITATION LIST

### PATENT LITERATURE

PATENT LITERATURE 1: Japanese Unexamined Patent Application Publication No. 2005-203374

### SUMMARY

On the other hand, the power storage device is required to have a high capacity and a high output. To meet the demand, the reliability is also required.

Accordingly, it is an advantage of the present disclosure to provide a power storage device that can improve the reliability.

A power storage device according to the present disclosure comprises: an electrode assembly where a first polar plate and a second polar plate are stacked with a separator intervening therebetween; and a current collector plate disposed on one end side in an axial direction of the electrode assembly, wherein the current collector plate includes a joined portion that extends along a stacking direction of the first polar plate and the second polar plate, and is joined by welding to the second polar plate, and at a terminal end portion of the joined portion in a welding direction, a fusion reduction portion is formed.

According to the power storage device in the present disclosure, the reliability can be improved.

### BRIEF DESCRIPTION OF DRAWING

FIG. 1 is a schematic sectional view showing a power storage device that is an example of an embodiment.
FIG. 2 is a perspective view showing a negative electrode current collector plate that is an example of the embodiment as viewed from below.
FIG. 3 is a sectional view taken along AA in FIG. 2.
FIG. 4 is a sectional view of a negative electrode current collector plate that is another example of the embodiment taken along AA.
FIG. 5 is a sectional view of a negative electrode current collector plate that is another example of the embodiment taken along AA.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Device]

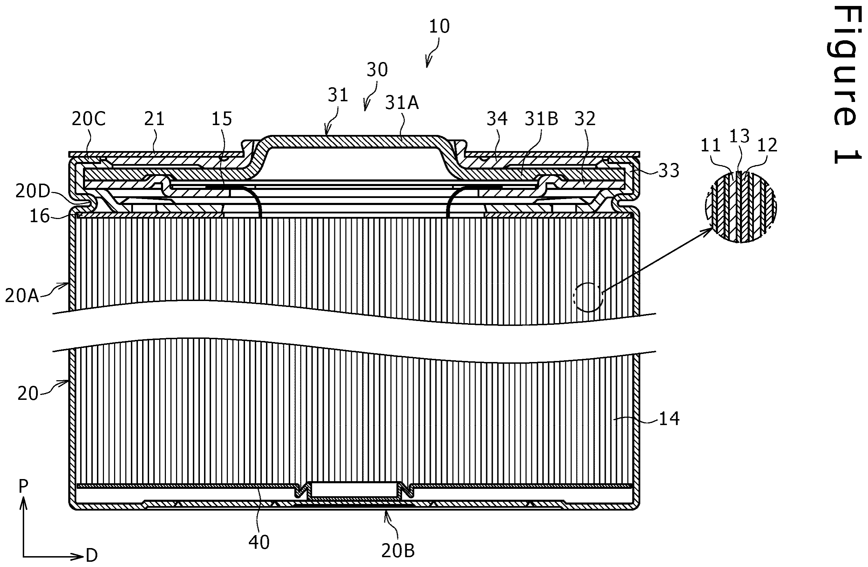

Referring to FIG. 1, a power storage device 10 that is an example of an embodiment is described.

The power storage device 10 is used as, for example, a power source of an electric vehicle. However, the power storage device in the present disclosure is not limited to the power source of an electric vehicle, and may be used as, for example, a power source of motor-driven electric equipment, such as an electric tool, an electric-assisted bicycle, an electric motorcycle, an electric wheelchair, an electric tricycle, an electric cart or the like. The power storage device in the present disclosure may be used as, for example, a power source for various types of electric equipment that are used indoors and outdoors, such as a cleaner, a radio, a lighting device, a digital camera, a video camera or the like.

The power storage device 10 includes: a wound-type electrode assembly 14 where a positive electrode plate 11 as a first polar plate, and a negative electrode plate 12 as a second polar plate are wound together, with a separator 13 intervening therebetween; an outer can 20 that accommodates the electrode assembly 14; and a sealing assembly 30 that blocks an opening of the outer can 20. The outer can 20 houses electrolytic solution along with the electrode assembly 14. The electrolytic solution in the present embodiment is non-aqueous electrolytic solution, but may be aqueous electrolytic solution. The power storage device 10 may be a capacitor.

In the following, each member is sometimes described using an axial direction P, a circumferential direction R, and a radial direction D. For convenience of description, it is sometimes described assuming that in the axial direction P, a side on which the sealing assembly 30 is provided is an upper side, and a side on which a bottom portion 20B of the outer can 20 is formed is a lower side.

The positive electrode plate 11, the negative electrode plate 12, and the separator 13 are strip-shaped elongated bodies, and spirally wound. In this case, the positive electrode plate 11 and the negative electrode plate 12 are stacked in a deviating manner so as to protrude oppositely from each other, in the axial direction P (the height direction of the power storage device 10). The composite agent layer of the negative electrode plate 12 may be formed to have a dimension one size larger than the composite layer of the positive electrode plate 11 in order to prevent lithium from depositing. That is, the composite layer of the negative electrode plate 12 may be formed longer than the composite agent layer of the positive electrode plate 11 in the longitudinal direction and the width direction (transverse direction). The separator 13 is formed to have a dimension at least one size larger than the positive electrode plate 11. For example, two separators 13 are disposed so as to sandwich the positive electrode plate 11. Note that the electrode assembly 14 is not necessarily configured in the state where the positive electrode plate 11 and the negative electrode plate 12 are wound. For example, the electrode assembly 14 may be configured such that a plurality of positive electrode plates 11 and a plurality of negative electrode plates 12 are alternately stacked.

The positive electrode plate 11 includes a positive electrode core body, and a positive electrode composite agent layer formed on at least one surface of the core body. The positive electrode core body may be made of, for example, metal foil that is stable in the potential range of the positive electrode plate 11, such as of aluminum or an aluminum alloy, a film on which the metal is disposed as the surface layer, or the like. Preferably, the positive electrode composite agent layer contains, for example: a positive-electrode active material; a conductive agent, such as acetylene black; and a binding agent, such as polyvinylidene fluoride, and is formed on each of the opposite surfaces of the positive electrode core body. For example, lithium transition metal composite oxide is used as the positive-electrode active material.

The negative electrode plate 12 includes a negative electrode core body, and a negative electrode composite agent layer formed on at least one surface of the core body. The negative electrode core body may be made of, for example, metal foil that is stable in the potential range of the negative electrode plate 12, such as of copper or a copper alloy, a film on which the metal is disposed as the surface layer, or the like. Preferably, the negative electrode composite agent layer contains, for example, a negative-electrode active material, and a binding agent such as styrene-butadiene rubber (SBR), and is formed on each of the opposite surfaces of the negative electrode core body. For example, graphite, a silicon-containing compound or the like is used as the negative-electrode active material.

The non-aqueous electrolyte housed in the outer can 20 contains a non-aqueous solvent, and electrolyte salt dissolved in the non-aqueous solvent. The non-aqueous solvent may be, for example, any of esters, ethers, nitriles, or amides, a composite solvent of two or more of them, and the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆. Note that the non-aqueous electrolyte may be gel electrolyte, solid electrolyte or the like instead of the electrolytic solution.

A positive electrode lead 15 that extends from the axial-direction-P upper end of the electrode assembly 14, and connects the positive electrode plate 11 included in the electrode assembly 14 and the current collector plate 32 of the sealing assembly 30 to each other, and an upper insulating plate 16 disposed between the electrode assembly 14 and the sealing assembly 30 are provided above the electrode assembly 14. The positive electrode lead 15 electrically connects the positive electrode plate 11 and the sealing assembly 30 to each other. Accordingly, the positive electrode cap 31 of the sealing assembly 30 functions as a first polar external terminal (positive electrode external terminal). The upper insulating plate 16 prevents the positive electrode plate 11 and the positive electrode lead 15 from coming into contact with the outer can 20, and also prevents the positive electrode lead 15 from coming into contact with the negative electrode plate 12 of the electrode assembly 14.

Under the electrode assembly 14 there is provided a negative electrode current collector plate 40, which is described later in detail. A negative electrode core exposed portion (not shown) provided with no negative electrode composite agent layer in the negative electrode core material protrudes on the lower side of the negative electrode plate 12 in the axial direction P (not shown). The negative electrode core exposed portion is formed from an end of the elongated negative electrode plate 12 on a winding initiation side in the longitudinal direction (circumferential direction R) to an end of its winding completion side. The negative electrode core exposed portion is joined to the negative electrode current collector plate 40, and the negative electrode plate 12 and the negative electrode current collector plate 40 are electrically connected to each other. Furthermore, the negative electrode current collector plate 40 is joined to the inner surface of the bottom portion 20B of the outer can 20, and the negative electrode current collector plate 40 and the outer can 20 are electrically connected to each other.

The outer can 20 is a metal container that has a closed-bottom cylindrical shape with the upper end in the axial direction P being open. The outer can 20 is typically made of metal, with iron as the principal component, but may be made of metal, with aluminum or the like as the principal component, in a case where the positive electrode plate 11 is connected. The outer can 20 includes: a cylindrical portion 20A that is formed to have a cylindrical shape; a bottom portion 20B that has a circular shape in bottom view; a shoulder portion 20C that is formed to have a ring shape along the circumferential direction R of the outer can 20 at the opening end of the cylindrical portion 20A; and a grooved portion 20D that is formed along the circumferential direction R of the cylindrical portion 20A. The outer can 20 is provided with a negative electrode cap 21 that is a second polar external terminal (negative electrode external terminal).

The grooved portion 20D is formed adjacent to the opening of the outer can 20 at a position apart from the shoulder portion 20C by a predetermined length. The grooved portion 20D is a portion that is part of the cylindrical portion 20A projecting to the inside of the outer can 20, and is formed by applying a spinning process to the cylindrical portion 20A from the outside, for example. Note that at the position where the grooved portion 20D is formed, the outer can 20 has a reduced diameter, and a narrow-lined groove is formed in the outer-peripheral surface of the cylindrical portion 20A. Preferably, the grooved portion 20D has a substantially U-shaped section, and is formed to have a ring shape over the entire length in the circumferential direction R of the cylindrical portion 20A.

The negative electrode cap 21 is electrically connected to the negative electrode plate 12 via the outer can 20, and functions as a negative electrode external terminal. The negative electrode cap 21 is formed to have a ring shape that has an opening at a center portion in the radial direction D. The negative electrode cap 21 is welded to the cylindrical portion 20A of the outer can 20, and is electrically connected to the outer can 20.

The sealing assembly 30 is formed to have a disk shape as a whole, and includes the positive electrode cap 31, a current collector plate 32, a gasket 33, and an insulating member 34. The sealing assembly 30 is disposed above the grooved portion 20D of the outer can 20, and is fixed to the upper end portion of the outer can 20. In more detail, the shoulder portion 20C of the outer can 20 is bent inward in the radial direction D and swagged to the sealing assembly 30, the sealing assembly 30 is fixed to the upper end portion of the outer can 20 by the shoulder portion 20C and the grooved portion 20D of the outer can 20, and the sealing assembly 30 blocks the opening of the outer can 20.

The positive electrode cap 31 is electrically connected to the positive electrode plate 11 via the positive electrode lead 15 and the current collector plate 32, and functions as a positive electrode external terminal. The positive electrode cap 31 is a disk-shaped metal member, and includes: an elevated portion 31A whose center portion in the radial direction D protrudes to the outside of the power storage device 10; and a flange portion 31B formed around the elevated portion 31A. The positive electrode cap 31 is disposed on the upper surface side of the sealing assembly 30, and is exposed outside the outer can 20, thus forming a top surface of the power storage device 10. A positive electrode tab or the like of the current collector member of the power storage module is joined by welding to the elevated portion 31A.

The current collector plate 32 is electrically connected to the positive electrode plate 11 via the positive electrode lead 15, and functions as a positive electrode current collector plate. The current collector plate 32 is a metal member that has a diameter comparable to that of the positive electrode cap 31. The current collector plate 32 is formed to have a ring shape that has an opening at a center portion in the radial direction D. The current collector plate 32 is disposed closer to the electrode assembly 14 than the positive electrode cap 31. The current collector plate 32 is welded to the positive electrode cap 31, and is thus welded, for example, at a position closer to the outer peripheral edge of the positive electrode cap 31 than its center in the radial direction D.

The gasket 33 is a rubber member or a plastic member that prevents the positive electrode cap 31 and the current collector plate 32 from coming into contact with the outer can 20, and secures electrical insulation between the outer can 20 and the sealing assembly 30. The gasket 33 blocks the gap between the outer can 20 and the sealing assembly 30, and seals the inside of the power storage device 10. The gasket 33 is provided between the outer peripheral portion of the stacked body of the positive electrode cap 31 and the current collector plate 32, and the outer can 20. The gasket 33 covers the upper surface of the flange portion 31B of the positive electrode cap 31, the side surfaces of the positive electrode cap 31 and the current collector plate 32, and the lower surface of the current collector plate 32, at the outer peripheral portion of the stacked body.

The insulating member 34 is a rubber member or a plastic member for preventing contact between the positive electrode cap 31 and the negative electrode cap 21, and securing electric insulation between the positive electrode cap 31 and the negative electrode cap 21. The insulating member 34 is formed to have a ring shape that has an opening at a center portion in the radial direction D.

### [Negative Electrode Current Collector Plate]

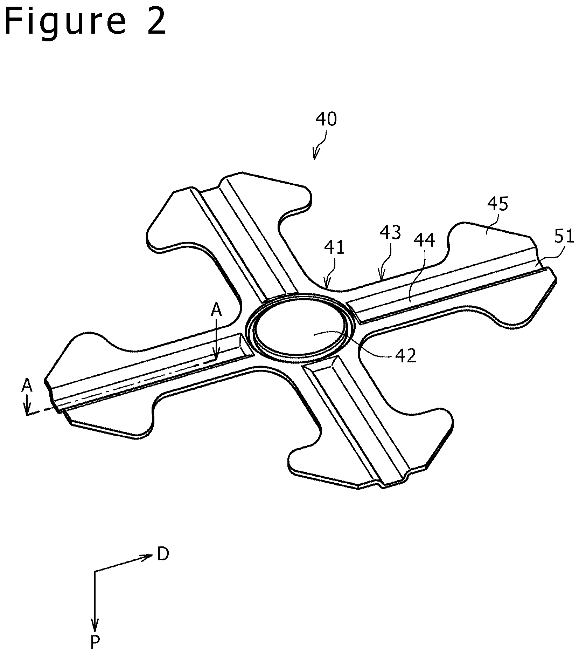

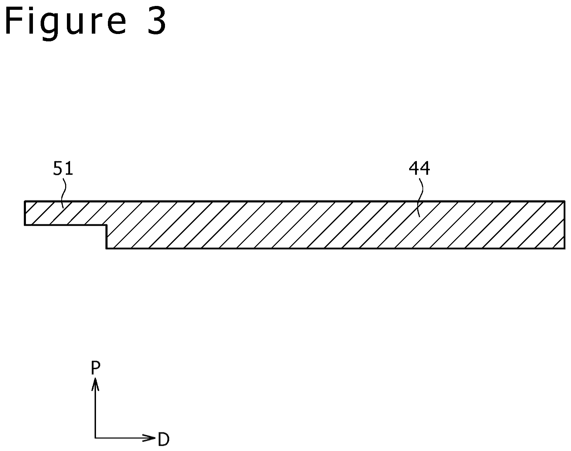

Referring to FIGS. 2 and 3, the negative electrode current collector plate 40 that is an example of the embodiment is described.

The negative electrode current collector plate 40 as the current collector plate is joined to the negative electrode core exposed portion that protrudes from the axial-direction-P lower side of the electrode assembly 14. The negative electrode current collector plate 40 is joined to the bottom portion 20B of the outer can 20, and allows the outer can 20 to function as a negative electrode external terminal (see FIG. 1). Although the details are described later, according to the negative electrode current collector plate 40, the reliability can be improved.

The negative electrode current collector plate 40 is made of metal, preferably, for example, made of copper, a copper alloy, nickel or a nickel alloy, an iron material having a nickel-plated surface, or the like. The negative electrode current collector plate 40 is provided under the electrode assembly 14 in the axial direction P, and is housed along with the electrode assembly 14 in the outer can 20. In other words, the negative electrode current collector plate 40 is disposed between the electrode assembly 14 and the bottom portion 20B of the outer can 20 (see FIG. 1).

As shown in FIG 2, the negative electrode current collector plate 40 includes a center portion 41 provided at a center portion in the radial direction D, and extending portions 43 each extending from the center portion 41 along the radial direction D, which are described later in detail. The center portion 41 includes a can bottom joined portion 42 encircled by a circular-shaped groove. The can bottom joined portion 42 is joined by welding to the bottom portion 20B of the outer can 20.

The plurality of extending portions 43 each extend from the center portion 41 along the radial direction D (the stacking direction of the positive electrode plate 11 and the negative electrode plate 12). The plurality of extending portions 43 are disposed at intervals in the circumferential direction R. In the example shown in FIG. 3, the four extending portions 43 are radially disposed from the center portion 41 at 90°-intervals. Note that the present embodiment has the configuration where the extending portions 43 extend in the four directions. Alternatively, a configuration where the extending portions 43 extend in one, two, three, five or more directions may be employed.

Each extending portion 43 includes a planar-shaped joined portion 44 extending in the radial direction D, and edge portions 45 formed at the opposite ends of the joined portion 44 in the circumferential direction R, which are described later in detail. Note that the edge portions 45 may be provided at the opposite ends of one joined portion 44. Alternatively, the edge portion 45 may be formed only on one end in the circumferential direction R.

The joined portion 44 is a portion joined by welding to the negative electrode core exposed portion. In more detail, the negative electrode core exposed portion is joined by welding to the upper surface of the joined portion 44 in the axial direction P. The joined portion 44 extends along the radial direction D, and is formed at a portion corresponding to a base of a depressed shape viewed from the radial direction D. A reduction portion 51, which is described later in detail, is formed at a radial-direction-D outer end portion of the joined portion 44.

As shown in FIG. 3, the reduction portion 51 as a fusion reduction portion is a portion that suppress excessive fusion of the joined portion 44. Although the details are described later, the reduction portion 51 suppresses excessive fusion, which can suppress the sputtering from occurring. Accordingly, the reliability of the power storage device 10 can be improved.

The reduction portion 51 is formed at a terminal end portion of the joined portion 44 in the welding direction. In the present embodiment, the joined portion 44 is joined by welding from the inside to the outside in the radial direction D. Accordingly, the reduction portion 51 is formed at an end portion of the joined portion 44 on the outer-peripheral side in the stacking direction of the positive electrode plate 11 and the negative electrode plate 12 (radial-direction-D outer end portion). Note that in a case where the joined portion 44 is welded from the outside to the inside in the radial direction D, the reduction portion 51 may be formed at an inner peripheral end portion of the joined portion 44 in the stacking direction of the electrode assembly 14 (the inner end portion in the radial direction D).

The reduction portion 51 is formed at a radial-direction-D outer end portion of the joined portion 44 as described above. Preferably, provided that the length of the joined portion 44 in the radial direction D is 1.0, the length of the reduction portion 51 in the radial direction D is greater than or equal to 0.05 and less than or equal to 0.1.

The reduction portion 51 is formed to be thinner than the other portions of the joined portion 44 except the reduction portion 51. In more detail, preferably, provided that the thickness of each of the other portions of the joined portion 44 except the reduction portion 51 is 1, the thickness of the reduction portion 51 is greater than or equal to 0.2 and less than or equal to 0.7.

In the present embodiment, the reduction portion 51 is formed so as to make the upper surface side of the joined portion 44 flat. However, there is no limitation to this. The reduction portion 51 may be formed so as to make the upper surface side of the joined portion 44 flat. Steps on the upper surface side and the lower surface side of the joined portion 44 from the reduction portion 51 may be formed.

Here, when the joined portion 44 of the negative electrode current collector plate 40 and the negative electrode core exposed portion are welded, welding is performed with laser sweeping from the inside to the outside in the radial direction D. In this case, at the outer end portion in the radial direction D (the terminal end portion in the welding direction), heat is accumulated in a base material (the joined portion 44 of the negative electrode current collector plate 40), molten pool becomes excessive, and sputtering occurs in some cases. When sputtering is scattered between the negative electrode current collector plate 40 and the electrode assembly 14, and adheres to the composite agent of the electrode assembly 14, a voltage failure of the power storage device 10 sometimes occurs.

According to the reduction portion 51, as the reduction portion 51 is formed to be thinner than the other portions, the reduction portion 51 is resistant to accumulating heat during welding. As the amount of base material is smaller than that of the remaining portion, the molten pool can be prevented from being excessive. Accordingly, sputtering can be suppressed from occurring, and a voltage failure of the power storage device 10 due to scattering of sputtering between the negative electrode current collector plate 40 and the electrode assembly 14 and to adherence of sputtering to the composite agent of the electrode assembly 14 can be prevented. Furthermore, the reliability of the power storage device 10 can be improved.

### [Another Embodiment]

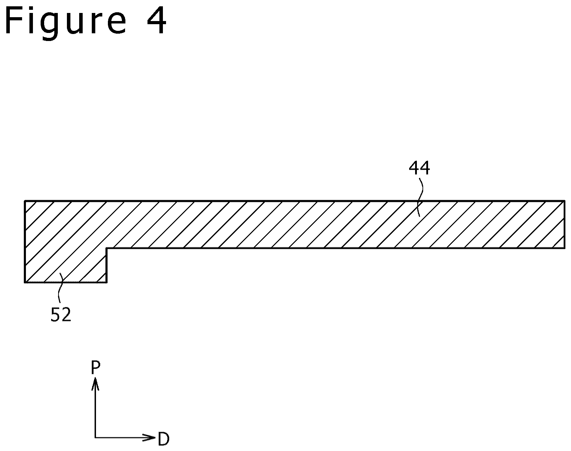

Referring to FIG. 4, a reduction portion 52 that is another example of the embodiment is described. The configuration other than that of the aforementioned reduction portion 51 is described below. The description of the configuration and advantageous effects similar to those of the aforementioned reduction portion 51 is omitted.

The reduction portion 52 is formed to be thicker than the other portions of the joined portion 44 except the reduction portion 51. In more detail, preferably, provided that the thickness of each of the other portions of the joined portion 44 except the reduction portion 51 is 1.0, the thickness of the reduction portion 51 is greater than or equal to 1.5 and less than or equal to 3.0.

In the present embodiment, the reduction portion 52 is formed so as to make the upper surface side of the joined portion 44 flat. However, there is no limitation to this. The reduction portion 52 may be formed so as to make the upper surface side of the joined portion 44 flat. Steps on the upper surface side and the lower surface side of the joined portion 44 from the reduction portion 52 may be formed.

According to the reduction portion 52, this reduction portion 52 is formed to be thicker than the other portions. Accordingly, the thermal capacity of the reduction portion 52 is higher than that of each of the other portions, which can reduce the amount of heat per unit volume accumulated in the reduction portion 52 during welding, and can prevent the molten pool from being excessive. Accordingly, sputtering can be suppressed from occurring, and a voltage failure of the power storage device 10 due to scattering of sputtering between the negative electrode current collector plate 40 and the electrode assembly 14 and to adherence of sputtering to the composite agent of the electrode assembly 14 can be prevented. Furthermore, the reliability of the power storage device 10 can be improved.

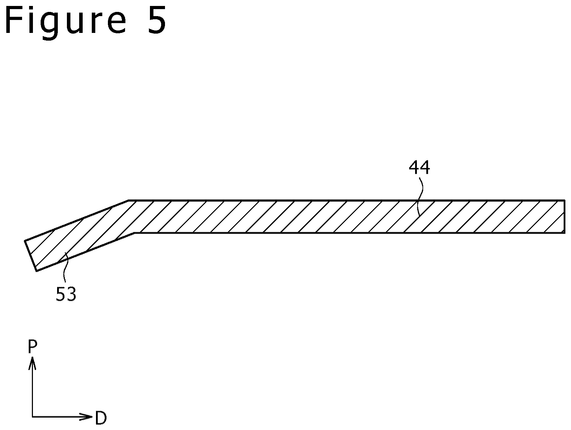

Referring to FIG. 5, a reduction portion 53 that is another example of the embodiment is described.

The reduction portion 53 is formed to be inclined so as to be apart from the electrode assembly 14 as approaching the outer-peripheral side. More specifically, the reduction portion 53 is formed to be inclined downward in the axial direction P as approaching the outside in the radial direction D.

According to the reduction portion 53, this reduction portion 53 is formed to be inclined downward in the axial direction P as approaching the outside in the radial direction D. Consequently, a space into which the molten pool is escaped is formed between the reduction portion 53 and the electrode assembly 14 during welding, and a voltage failure of the power storage device 10 due to scattering of sputtering that occurs in the molten pool between the negative electrode current collector plate 40 and the electrode assembly 14 and to adherence of sputtering to the composite agent of the electrode assembly 14 can be prevented. Furthermore, the reliability of the power storage device 10 can be improved. Note that the reduction portion 53 is formed by bending the end portion of the joined portion 44 and forming this reduction portion 53. However, there is no limitation to this. The surface of the reduction portion 53 that faces the electrode assembly 14 may be inclined so as to make the joined portion 44 thinner as approaching the welding terminal end. According to this configuration, the height of the laser irradiation surface of the reduction portion 53 can be prevented from being uneven.

Note that the present disclosure is not limited to the aforementioned embodiments and their modified examples, and it is a matter of course that various change and improvement can be made in a range of the items described in the claims of the present application. In the above description, the configuration of the current collector plate used for the power storage device in the present disclosure is described as that of the negative electrode current collector plate. Alternatively, the current collector plate in the present disclosure may be a positive electrode current collector plate.

### REFERENCE SIGNS LIST

10 Power storage device, 11 Positive electrode plate (first polar plate), 12 Negative electrode plate (second polar plate), 13 Separator, 14 Electrode assembly, 15 Positive electrode lead, 16 Upper insulating plate, 20 Outer can, 20A Cylindrical portion, 20B Bottom portion, 20C Shoulder portion, 20D Grooved portion, 21 Negative electrode cap, 30 Sealing assembly, 31 Positive electrode cap, 31A Elevated portion, 31B Flange portion, 32 Current collector plate, 33 Gasket, 34 Insulating member, 40 Negative electrode current collector plate, 41 Center portion, 42 Can bottom joined portion, 43 Extending portion, 44 Jointed portion, 45 Edge portion, 51, 52, 53 Reduction portion (fusion reduction portion)

## Claims

1. A power storage device, comprising: an electrode assembly where a first polar plate and a second polar plate are stacked with a separator intervening therebetween; and a current collector plate disposed on one end side in an axial direction of the electrode assembly, wherein
the current collector plate includes a joined portion that extends along a stacking direction of the first polar plate and the second polar plate, and is joined by welding to the second polar plate, and
at a terminal end portion of the joined portion in a welding direction, a fusion reduction portion is formed.

2. The power storage device according to Claim 1, wherein
the fusion reduction portion is formed at an end portion of the joined portion on an outer-peripheral side of the electrode assembly in the stacking direction.

3. The power storage device according to Claim 1 or 2, wherein
the fusion reduction portion is formed to be thinner than another portion of the joined portion.

4. The power storage device according to Claim 1 or 2, wherein
the fusion reduction portion is formed to be thicker than another portion of the joined portion.

5. The power storage device according to Claim 1 or 2, wherein
a surface of the fusion reduction portion that faces the electrode assembly is formed to be inclined so as to be apart from the electrode assembly as approaching an outer-peripheral side.
